# EUROPEAN PATENT APPLICATION

(11) **EP 3 836 135 A1**
(43) Date of publication of application: **16.06.2021**
(21) Application number: 20213262.7
(22) Date of filing: 11.12.2020
(51) Int. Cl.: G09G 5/00

(54) **METHOD AND SYSTEM FOR SWITCHING EDID VERSION IN TV DEVICES**

(30) Priority: 13.12.2019 CN 201911283074
(71) Applicant: Amlogic (Shenzhen), Ltd., Shenzhen Guangdong (CN)
(72) Inventor: YU, Yejian, Shenzhen, Guangdong (CN)
(74) Representative: LLR

(57) **Abstract**

The present disclosure provides a method and a system for switching EDID version in a TV device. The TV device includes an application layer, a middleware layer, a driving layer, a display, and at least one memory. The method includes: determining whether a target resolution of the TV device is high in response to user commands by the application layer; retrieving EDID versions of the TV device via reading EDID files stored in at least one the memory by the middleware layer; writing the EDID versions into registers of the driving layer and activating a HDMI port by the driving layer; reading the EDID versions stored in the registers by a transmitting end of HDMI signals upon determining the HDMI port being activated; and outputting the HDMI signals via the display of the TV device.

## Description

### BACKGROUND

### 1. Technical Field

The present disclosure relates to television (TV) technology, and particularly to a method and a system for switching extended display identification data (EDID) version in TV devices.

### 2. Description of Related Art

The current HDMI technology has developed to version 2.1, which can support resolutions of 8K and 60Hz, and the corresponding EDID version has also developed from the previous version 1.4 to 2.0. At present, it is difficult for mainstream TV devices to be fully compatible with the changes in EDID version. Even the compatibility of different versions cannot be achieved. As a result, the TVs are unable to recognize the HDMI signals of different resolutions.

The current compatibility issues of HDMI and EDID versions will be discussed hereafter. First, the TV receiver cannot recognize the contents of different resolutions by using one EDID version as it's not compatible among all EDID versions. Vendor-Specific Data Block in EDID is one example. With respect to version 1.4 used in the CEA standard, the HDMI Vendor-Specific Data Block (HDMI VSDB) is adopted. With respect to version 2.0, the HDMI Forum Vendor Specific Data Block (HF-VSDB) is adopted. Some early HDMI transmitters can only recognize HDMI VSDB. Upon receiving signals decoded by HF-VSDB, the TV will be recognized as a DVI device, and thus the HDMI signals will be considered as DVI signals.

Second, some TV devices only use one copy of EDID to support HDMI interfaces. The removal of the version 2. 0, to some extent limits the HDMI high resolution capability, which makes HDMI transmission efficiency lower. Also, the high resolutions above 4K cannot be realized.

Some TVs adopt an adaptive method to switch EDID version. Nevertheless, the sender has to identify the resolution at first. Afterward, the EDID version can be automatically switched the EDID version after the EDID version has been conveyed to the sender. The efficiency of such adaptive method is not good enough as it takes a great deal of time to recognize the signals.

### BRIEF DESCRIPTION OF THE DRAWINGS

To describe the technical schemes in the embodiments of the present disclosure or in the prior art more clearly, the following briefly introduces the drawings required for the descriptions in the present disclosure. It should be understood that, the drawings in the following description merely show some embodiments of the present disclosure. For those skilled in the art, other drawings can be obtained according to the drawings without creative efforts.
FIG. 1 is a schematic view illustrating a method for switching EDID version in a TV device in accordance with one embodiment of the present disclosure.
FIG. 2 is a schematic view showing the system for switching EDID version in a TV device in accordance with one embodiment of the present disclosure.
FIG. 3 is a schematic view showing the channel switching between the driving layer and the middleware layer in FIG. 2.

### DETAILED DESCRIPTION

In order to make the objects, features and advantages of the present disclosure more obvious and easy to understand, the technical solutions of the present disclosure will be further described below with reference to the drawings and the embodiments. Apparently, the described embodiments are part of the embodiments of the present disclosure, not all of the embodiments. All other embodiments obtained by those skilled in the art based on the embodiments of the present disclosure without creative efforts are within the scope of the present disclosure.

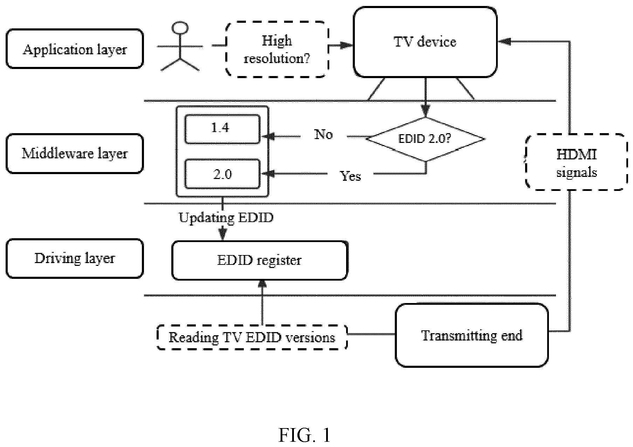

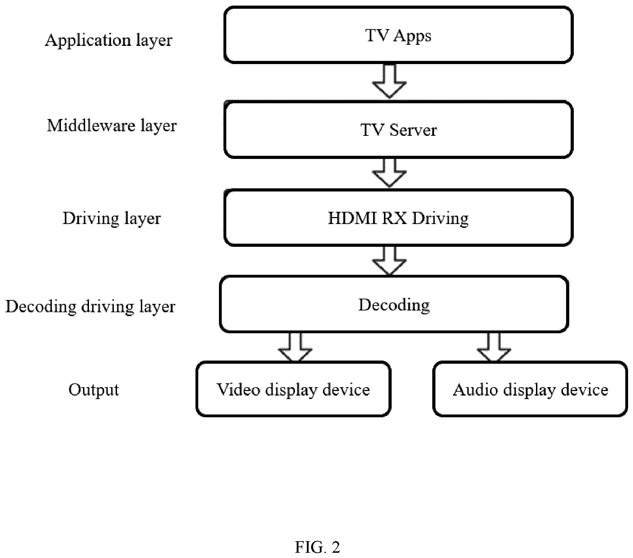

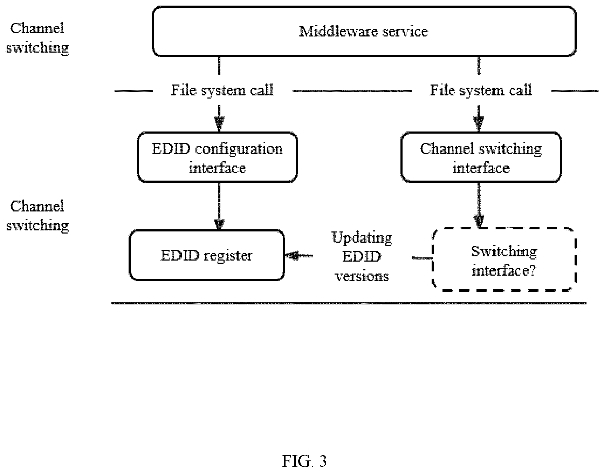

Referring to FIGS. 1-3, the present disclosure relates to a method for switching EDID version in a TV device. The TV device includes an application layer, a middleware layer, a driving layer, a decoding driving layer, a controller and at least one memory. The application layer is configured to interact with users via at least one user interface.

The application layer includes a channel switching interface. The channel switching layer determines whether a target resolution of the TV set is high in response to user commands. In addition, the application layer is configured to adopt a high resolution timing upon determining the target resolution of the TV device is high by the application layer.

The application layer will initiate a channel switching process. In an example, the channel may be called by the instruction "SetSourceSwitchInput". At this time, the middleware layer first determines the EDID capability of the TV, and then reads the different versions of EDID files stored in the least one memory.

The middleware layer initiates a file system call provided by the driving layer to write the compatible EDID versions into the registers of the driving layer. Afterward, the driving layer activates the current HDMI port to switch the EDID version and HDMI channel.

In one embodiment, the EDID files include, but are not limited to, version 1.4 and version 2.0.

In one embodiment, the driving layer is configured to recognize the signals after switching the HDMI channel. After the current HDMI port is activated, the driving layer updates the EDID version to the register, such that a transmitting end of the HDMI signals can read the EDID version. The transmitting end of the HDMI signals is also configured to determine a compatible HDMI resolution rate of the TV device. In addition, the driving layer is configured to pull up or down the Hot Plug Detect (HPD) pins.

Upon detecting the state of the HPD pins has been changed, the transmitting end of the HDMI signals begins to read the EDID version of the TV and sends the HDMI signals with the target resolution. At this moment, the state machine starts to recognize the HDMI signals.

Further, after the signals are recognized, the driving layer sending the HDMI signals to the decoding driving layer. After receiving the HDMI signals, the decoding driving layer begins to decode the HDMI signals after determining the HDMI signals are stable. Afterward, the audio/video signals are outputted through the TV device.

In brief, the method for switching EDID version in the TV device includes the following steps:
(1) in response to an user input, a different EDID version may be selected;
(2) the transmitting end of the HDMI signals reads the EDID version, and recognizes a compatible HDMI resolution rate of the TV device;
(3) the transmitting end determines the target resolution rate and sends the HDMI signals to the TV device; and
(4) the HDMI signals are displayed through the TV device.

In one example, when the EDID is version 2.0, the resolution rates may include: 3840x2160p 60Hz, 3840x2160p 50Hz, 4096x2160p 60Hz, 4096x2160p 50Hz, 4096x2160p 30Hz.

HDMI is generally adopted as a signal source of the TV, and the user may select it as the current video/audio source. It is the application layer that interacts with the user. That is, the user selects HDMI as the signal source via the user interface through the remote control, which may be considered as the channel switching. In one example, a software package, such as Android Application Package (APK), may be adopted to call the channel switching interface encapsulated in the middleware layer. The middleware layer is a service process. The HDMI driving layer is configured to initialize the hardware during a probe phase when the TV engages with the driving layer. In addition, the driving layer is configured to recognize the HDMI signals so as to complete the channel switching.

In an example, during the initialization process, the following processes are executed, including: (1) Configuring interrupts, clocks, registers and other resources required by the driving layer; (2) Registering the file system such that the file system may be used by the middleware layer; and (3) Completing the initialization of the controller.

The signals are recognized by a state machine. The state machine begins to operate during the probe phase. When the channel is switched to HDMI, the middleware layer retrieves the EDID information. After updating the EDID version to the register, the middleware layer further executes the initialization process, including determining the current HDMI port. Upon determining the change of the HPD pins, the transmitting end of the HDMI begins to read the EDID version and then transmits the signals to the TV. At this moment, the state machine begins to: (1) FSM_INIT : after the HPD pin is pulled up, the initialization process begins; (2) FSM_WAIT_CLK_STABLE : When the clock of HDMI is locked; (3) FSM_SIG_UNSTABLE : an unstable state after the clock of HDMI is locked. The signals cannot be recognized in this state; (4) FSM_SIG_STABLE : the timing sent by the transmitting end can be recognized; (5) FSM_SIG_READY: the signals are initialized, and the decoding driving layer is notified so as to begin the decoding process. The middleware layer is configured to provide the interface for the application layer and provide the EDID version to the driving layer via the file system. Two interfaces are provided to the application layer, including an EDID configuration interface (SetHdmiEdidVersion), and a channel switching interface (SetSourceSwitchInput). The application layer adopts the EDID configuration interface to switch the EDID version. Upon receiving the version switching instruction, the middleware layer set a flag bit so as to recognize the EDID version. When the user selects the HDMI channel, the application layer adopts the channel switching interface to switch the channel. At this time, the middleware layer first determines the EDID version, and then read the EDID versions stored in the memory. In the end, the file system is called to write the EDID version into the register, and the EDID version and the channel may be switched.

Comparing to HDMI version 1.4, HDMI 2.0 is configured to support the transmission rate in a range between 340Mcsc and 600Mcsc. That is, the EDID version may support the resolution up to 4K, including 3840x2160p 60Hz, 3840x2160p 50Hz, 4096x2160p 60Hz, 4096x2160p 50Hz,and 4096x2160p 30Hz. In brief, the above resolutions are supported only by EDID 2.0.

Embodiments are used in the present disclosure to illustrate the principle and implementation of the present disclosure. The descriptions of the forgoing embodiment are only used to help understand the technical schemes of the present disclosure and their core ideas. At the same time, for those skilled in the art, according to the ideas of the present disclosure, there will be changes in the specific implementation and the application scope. In summary, the contents of the present disclosure should not be construed as limitations to the present disclosure.

## Claims

1. A method for switching EDID version in a TV device, the TV device comprises an application layer, a middleware layer, a driving layer, a display, and at least one memory, the method comprising:
determining whether a target resolution of the TV device is high in response to user commands by the application layer;
retrieving EDID versions of the TV device via reading EDID files stored in at least one the memory by the middleware layer;
writing the EDID versions into registers of the driving layer and activating a HDMI port by the driving layer;
reading the EDID versions stored in the registers by a transmitting end of HDMI signals upon determining the HDMI port being activated; and
outputting the HDMI signals via the display of the TV device.

2. The method according to claim 1, wherein before the outputting step, the method further comprises:
recognizing the HDMI signals after receiving the HDMI signals from the transmitting end by the driving layer;
sending the HDMI signals to a decoding driving layer; and
decoding the HDMI signals upon determining the HDMI signals are stable.

3. The method according to claim 2, wherein the determining step further comprises:
adopting a high resolution timing upon determining the target resolution of the TV device is high by the application layer.

4. The method according to claim 3, wherein the HDMI port is activated by pulling up or down hot plug detect (HPD) pins by the driving layer.

5. The method according to claim 3, wherein the resolution rates comprise 3840x2160p 60Hz, 3840x2160p 50Hz, 4096x2160p 60Hz, 4096x2160p 50Hz, 4096x2160p 30Hz.

6. The method according to claim 3, wherein the method further comprises:
calling a channel switching interface in the middleware layer by Android Application Package (APK).

7. The method according to claim 3, wherein the method further comprises:
setting a flag bit by the middleware layer to recognize the EDID version.

8. The method according to claim 6, wherein before the determining step, the method further comprises:
setting the HDMI port as a data source by adopting the channel switching interface.

9. A system for switching EDID version in a TV device, the TV device comprises an application layer, a middleware layer, a driving layer, a display, a processor, and at least one memory, the system comprising:
one or more computer programs stored in the memory and executable on the processor, wherein the one or more computer programs comprise:
instructions for determining whether a target resolution of the TV device is high in response to user commands by the application layer;
instructions for retrieving EDID versions of the TV device via reading EDID files stored in at least one the memory by the middleware layer;
instructions for writing the EDID versions into registers of the driving layer and activating a HDMI port by the driving layer;
instructions for reading the EDID versions stored in the registers by a transmitting end of HDMI signals upon determining the HDMI port being activated; and
instructions for outputting the HDMI signals via the display of the TV device.

10. The system according to claim 9, wherein before executing the instructions for outputting the HDMI signals via the display of the TV device, the one or more computer programs further comprises:
instructions for recognizing the HDMI signals after receiving the HDMI signals from the transmitting end by the driving layer;
instructions for sending the HDMI signals to a decoding driving layer; and
instructions for decoding the HDMI signals upon determining the HDMI signals are stable.

11. The system according to claim 10, wherein the instructions for determining whether a target resolution of the TV device is high further comprise:
instructions for adopting a high resolution timing upon determining the target resolution of the TV device is high by the application layer.

12. The system according to claim 11, wherein the HDMI port is activated by pulling up or down hot plug detect (HPD) pins by the driving layer.

13. The system according to claim 11, wherein the resolution rates comprise 3840x2160p 60Hz, 3840x2160p 50Hz, 4096x2160p 60Hz, 4096x2160p 50Hz, 4096x2160p 30Hz.

14. The system according to claim 11, wherein the one or more computer programs further comprises:
instructions for calling a channel switching interface in the middleware layer by Android Application Package (APK).

15. The system according to claim 11, wherein the one or more computer programs further comprises:
instructions for setting a flag bit by the middleware layer to recognize the EDID version.

16. The system according to claim 14, wherein before executing the instructions for determining whether a target resolution of the TV device is high, the one or more computer programs further comprises:
instructions for setting the HDMI port as a data source by adopting the channel switching interface.
